(19) Europäisches Patentamt
European Patent Office
Office européen des brevets

(11) **EP 3 451 423 B1**

(12) **EUROPEAN PATENT SPECIFICATION**

(45) Date of publication and mention
of the grant of the patent:
**03.11.2021   Bulletin 2021/44**

(51) Int Cl.:
**H01M 4/1393** $^{(2010.01)}$   **H01M 4/133** $^{(2010.01)}$
**H01M 4/62** $^{(2006.01)}$   **H01M 10/0525** $^{(2010.01)}$
**H01M 4/04** $^{(2006.01)}$

(21) Application number: **18186814.2**

(22) Date of filing: **01.08.2018**

(54) **NEGATIVE ELECTRODE SLURRY, NEGATIVE ELECTRODE PLATE AND ELECTROCHEMICAL ENERGY STORAGE DEVICE**

NEGATIVELEKTRODENSCHLÄMME, NEGATIVELEKTRODENPLATTE UND ELEKTROCHEMISCHE ENERGIESPEICHERUNGSVORRICHTUNG

SUSPENSION D'ÉLECTRODE NÉGATIVE, PLAQUE D'ÉLECTRODE NÉGATIVE ET DISPOSITIF DE STOCKAGE D'ÉNERGIE ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **31.08.2017   CN 201710771572**

(43) Date of publication of application:
**06.03.2019   Bulletin 2019/10**

(73) Proprietor: **Contemporary Amperex Technology Co., Limited**
**Jiaocheng District**
**Ningde City,**
**Fujian 352100 (CN)**

(72) Inventors:
• **ZHU, Zhongsi**
**Ningde, Fujian 352100 (CN)**
• **ZHONG, Ze**
**Ningde, Fujian 352100 (CN)**
• **SUN, Chengdong**
**Ningde, Fujian 352100 (CN)**
• **ZHENG, Yi**
**Ningde, Fujian 352100 (CN)**
• **FENG, Lingyun**
**Ningde, Fujian 352100 (CN)**
• **ZHOU, Hang**
**Ningde, Fujian 352100 (CN)**
• **WANG, Long**
**Ningde, Fujian 352100 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
**US-A1- 2004 258 991     US-A1- 2006 257 738**

**Description**

CROSS-REFERENCE TO RELATED APPLICATIONS

The present application claims priority to Chinese patent application No. CN201710771572.3, filed on August 31, 2017.

**FIELD OF THE PRESENT INVENTION**

The present invention relates to the field of energy storage device, and more specifically relates to a negative electrode slurry, a negative electrode plate and an electrochemical energy storage device.

**BACKGROUND OF THE PRESENT INVENTION**

Lithium-ion battery is widely used in fields of consumer battery, power battery, energy storage battery and the like due to its high working voltage, large specific capacity, small self-discharge, long cycling life, no memory effect and environmental friendliness. Demands for high capacity and short charging time of the consumer battery and the power battery are increasing, the high capacity requires the battery to have high energy density, and the short charging time requires the battery to be rapidly charged with a large current, and large current charging requires a higher stability of materials such as a negative electrode active material, an electrolyte and a binder during charging and discharging.

The binder, as a composition of the battery, plays a role of improving electrochemical performance of the battery. To a battery system which has high demands on energy density and charging time, its negative electrode plate often uses water-soluble binder such as SBR-type polymer, styrene-acrylic-type polymer and acrylic-type polymer, they can effectively improve dynamic performance in precipitation lithium, rate capability and impedance. In order to further improve dynamic performance in rate capability and precipitation lithium of the battery, sodium carboxymethylcellulose can be replaced by polyacrylate polymer as a dispersant, however if polyacrylate polymer is used as the dispersant alone, when the charged-discharged cycle process is performed under low temperature and little electrolyte retention capability, capacity retention rate decreases quickly, and the battery will dive too early and cycle performance cannot meet the demands for use.

US 2006/257738 A1 discloses an anode active material slurry comprising: (a) a carbon-based anode active material, that is capable of lithium ion intercalation/deintercalation; (b) a conductive agent; (c) a binder comprising a styrene-butadiene-based polymer resin; (d) a thickener comprising a cellulose-based or an acrylate-based resin; (e) a dispersant comprising a polymer backbone capable of surface-adsorption and a side-chain having non-ionic surfactant properties; and (f) water.

US 2004/258991 A1 discloses an anode composition comprising: (a) an anode active material, (b) a synthetic rubber binder, (c) a cellulose-based dispersing agent and (d) a water-soluble anionic polyelectrolyte.

**SUMMARY OF THE PRESENT INVENTION**

In view of the problem existing in the background, an object of the present invention is to provide a negative electrode slurry, a negative electrode plate and an electrochemical energy storage device, the negative electrode slurry can improve dynamic performance and cycle performance of the electrochemical energy storage device at the same time.

In order to achieve the above object, in the present invention, the present invention provides a negative electrode slurry, which comprises a solvent and a solid component dispersed in the solvent. The solid component comprises a negative electrode active material, a water-soluble binder and a dispersant. The negative electrode active material comprises carbon-type active material. The dispersant comprises an A dispersant and a B dispersant, the A dispersant is a cellulose-type dispersant, the B dispersant is at least one of poly(acrylic acid)-type dispersant and polyacrylate-type dispersant. A surface of the negative electrode active material is coated with a layer of the A dispersant. An average distribution concentration of the A dispersant on the surface of the negative electrode active material is higher than an average distribution concentration of the A dispersant in the negative electrode slurry. The A dispersant is at least one selected from a group consisting of sodium carboxymethylcellulose, carboxymethylcellulose, methylcellulose, ethylcellulose, methylol cellulose and hydroxypropyl cellulose. The B dispersant is at least one selected from a group consisting of poly(acrylic acid), poly(methacrylic acid), sodium polyacrylate, sodium polymethacrylate, potassium polyacrylate, polypotassium methacrylate, lithium polyacrylate and lithium polymethacrylate. The water-soluble binder is at least one selected from a group consisting of styrene-butadiene latex, styrene-acrylic latex, polyacrylate, polyacrylate copolymer, polymethacrylate, poly(vinyl alcohol), polyurethane, polyacrylamide and acrylic acid and acrylonitrile copolymer.

In the present invention, the present invention provides a negative electrode plate, which comprises a negative electrode current collector and a negative electrode active material layer provided on a surface of the negative electrode current collector, the negative electrode active material layer is formed by that the negative electrode slurry of the present invention is coated on the negative electrode current collector and dried.

In the present invention, the present invention provides an electrochemical energy storage device, which comprises the negative electrode plate of the present invention.

Compared to the technology in the background, the present invention has the following beneficial effects: the negative electrode slurry according to the present invention comprises the negative electrode active material comprising the carbon-type active material, the A dispersant and the B dispersant, the A dispersant can form a protective film on a surface of the negative electrode active material, thereby avoiding a harmful effect of making a SEI film unstable because an unstable carboxylate formed by the B dispersant and an electrolyte salt will be left on the SEI film when the B dispersant is used alone, thus the A dispersant can improve cycle performance of the electrochemical energy storage device and prevent a cycling capacity of the electrochemical energy storage device from diving too early, and the B dispersant can improve dynamic performance of the electrochemical energy storage device, under a combined effect of the A dispersant and the B dispersant, on one hand, they can ensure that the electrochemical energy storage device has excellent dynamic performance, which can prevent lithium (or sodium, magnesium and zinc) from precipitating under condition of rapid and large current charging, on the other hand, they can ensure that the electrochemical energy storage device has excellent cycle performance.

## DETAILED DESCRIPTION

Hereinafter a negative electrode slurry, a negative electrode plate and an electrochemical energy storage device according to the present invention will be described in detail.

Firstly, a negative electrode slurry of the present invention will be described.

The negative electrode slurry of the present invention comprises a solvent and a solid component dispersed in the solvent. The solid component comprises a negative electrode active material, a water-soluble binder and a dispersant. The negative electrode active material comprises a carbon-type active material. The dispersant comprises an A dispersant and a B dispersant, the A dispersant is a cellulose-type dispersant, the B dispersant is at least one of poly(acrylic acid)-type dispersant and polyacrylate-type dispersant. A surface of the negative electrode active material is coated with a layer of the A dispersant. An average distribution concentration of the A dispersant on the surface of the negative electrode active material is higher than an average distribution concentration of the A dispersant in the negative electrode slurry. The A dispersant is at least one selected from a group consisting of sodium carboxymethylcellulose, carboxymethylcellulose, methylcellulose, ethylcellulose, methylol cellulose and hydroxypropyl cellulose. The B dispersant is at least one selected from a group consisting of poly(acrylic acid), poly(methacrylic acid), sodium polyacrylate, sodium polymethacrylate, potassium polyacrylate, polypotassium methacrylate, lithium polyacrylate and lithium polymethacrylate. The water-soluble binder is at least one selected from a group consisting of styrene-butadiene latex, styrene-acrylic latex, polyacrylate, polyacrylate copolymer, polymethacrylate, poly(vinyl alcohol), polyurethane, polyacrylamide and acrylic acid and acrylonitrile copolymer.

In the negative electrode slurry of the present invention, in a first charged-discharged cycle process of the electrochemical energy storage device, reaction will occur on a liquid-solid interface between the negative electrode active material and an electrolyte, and a passive film, that is SEI film (solid electrolyte interface film), will be formed and coated on a surface of the negative electrode active material. Formation of the SEI film has a crucial impact on performance of the negative electrode active material. On one hand, the formation of the SEI film consumes some metal ions and increases irreversible capacity of the first charged-discharged cycle process of the electrochemical energy storage device, thereby decreasing charging-discharging efficiency of the negative electrode active material; on the other hand, the SEI film is solvent insoluble and can stably exist in the electrolyte, also solvent molecules cannot pass through the passive film (SEI film), thus can effectively prevent the solvent molecules from co-intercalating and avoid damaging the negative electrode active material due to the co-intercalation of the solvent molecules, therefore cycle performance and service life of the electrochemical energy storage device can be greatly improved. In the charged-discharged cycle process of the electrochemical energy storage device, if the SEI film is unstable, continuous reaction will occur between the exposed negative electrode active material and the electrolyte when the SEI film is destroyed, and a new SEI film will be formed, which will continuously consume the metal ions and the solvent of the electrolyte, thereby decreasing conduction velocity of the metal ions and greatly decreasing cycle performance of the electrochemical energy storage device.

The negative electrode slurry according to the present invention comprises the negative electrode active material comprising the carbon-type active material, the A dispersant and the B dispersant. Binding force between the A dispersant and the carbon-type active material is greater than binding force between the B dispersant and the carbon-type active material, and dispersibility of the B dispersant dispersed in the solvent is superior to dispersibility of the A dispersant dispersed in the solvent. Therefore, the A dispersant can form a protective film on the surface of the carbon-type active material, the A dispersant (such as sodium carboxymethylcellulose) on the surface of the carbon-type active material can effectively improve surface roughness of the carbon-type active material, and is beneficial to form a stable SEI film. The main reason is that: when the B dispersant (such as polyacrylate) is used alone, an unstable carboxylate formed by the B dispersant and the electrolyte salt will be left on the SEI film, because the SEI film containing the component of carboxylate is unstable, cycle performance of the electrochemical energy storage device is poor, even may dive, however the carbon-type active material with the A dispersant protecting the surface thereof can effectively avoid above problem, therefore it can improve cycle performance of the electrochemical energy storage device and prevent the electrochemical energy storage device from diving too early. In addition, the B dispersant (such as polyacrylate) can also make the dispersing of the negative electrode slurry uniform, which is beneficial to prepare the negative electrode plate, and the B dispersant can improve dynamic performance (such as rate capability, precipitation lithium and the like) of the electrochemical energy storage device. For example, for the polyacrylate, its oxygen of carboxyl has large electronegativity and good ion endophilicity to the metal ions of the electrolyte, which is beneficial to the conduction of the metal ions, and is beneficial to improve charging-discharging performance under large rate capability of the electrochemical energy storage device.

In the negative electrode slurry of the present invention, if the B dispersant is used to disperse the negative electrode active material alone, an unstable SEI film will be formed on the surface of the negative electrode active material. When charged-discharged cycle process is performed, the SEI film is destroyed, continuous reaction will occur between exposed negative electrode active material and the electrolyte and a new SEI film will be formed, in this way the SEI film is repeatedly destroyed and then regenerated, continuously consumes the metal ions and the solvent of the electrolyte, thereby reducing conduction velocity of the metal ions. Therefore, when charged-discharged cycle process of the electrochemical energy storage device is preformed, capacity retention rate will be continuously deteriorated, and the electrochemical energy storage device will dive too early. If the A dispersant is used to disperse the negative electrode active material alone, when a content of the A dispersant is too low, the negative electrode active material cannot be effectively dispersed, when the content of the A dispersant is too high, the negative electrode active material is coated too thick, which is not beneficial to intercalation and deintercalation of the metal ions, and will deteriorate dynamic performance of the electrochemical energy storage device. Under a combined effect of the A dispersant and the B dispersant, on one hand, it can ensure that the electrochemical energy storage device has excellent dynamic performance, which can prevent lithium from precipitating under rapid and large current charging condition, on the other hand, it can ensure that the electrochemical energy storage device has excellent cycle performance.

In the negative electrode slurry of the present invention, the A dispersant is at least one selected from a group consisting of sodium carboxymethylcellulose, carboxymethylcellulose, methylcellulose, ethylcellulose, methylol cellulose and hydroxypropyl cellulose. Preferably, the A dispersant is selected from sodium carboxymethylcellulose.

In the negative electrode slurry of the present invention, the B dispersant is at least one selected from a group consisting of poly(acrylic acid), poly(methacrylic acid), sodium polyacrylate, sodium polymethacrylate, potassium polyacrylate, polypotassium methacrylate, lithium polyacrylate and lithium polymethacrylate. Preferably, the B dispersant is at least one selected from a group consisting of sodium polyacrylate, sodium polymethacrylate, lithium polyacrylate and lithium polymethacrylate.

In the negative electrode slurry of the present invention, the water-soluble binder is at least one selected from a group consisting of styrene-butadiene latex, styrene-acrylic latex, polyacrylate, polyacrylate copolymer, polymethacrylate, poly(vinyl alcohol), polyurethane, polyacrylamide and acrylic acid and acrylonitrile copolymer.

In the negative electrode slurry of the present invention, the carbon-type active material is at least one selected from a group consisting of artificial graphite, natural graphite, soft carbon and hard carbon. Preferably, the carbon-type active material comprises artificial graphite or natural graphite.

In the negative electrode slurry of the present invention, the negative electrode active material may further comprise at least one selected from a group consisting of silicon-type active material, tin-type active material and lithium titanate.

In the negative electrode slurry of the present invention, a content of the carbon-type active material is not less than 90% of a total mass of the negative electrode active material. For example, when the negative electrode active material comprises the carbon-type active material and the silicon-type active material, the content of the carbon-type active material is not less than 90% of the total mass of the negative electrode active material. This is because that volume expansion of silicon-type active material during charged-discharged cycle process is too large, so it is easy to pulverize, when the content of the silicon-type active material content is too high, during the charged-discharged cycle process, the A dispersant cannot form a better coating layer on the surface of the negative electrode active material, thereby affecting improvement of performance of the electrochemical energy storage device.

In the negative electrode slurry of the present invention, an average distribution concentration of the A dispersant on the surface of the negative electrode active material is higher than an average distribution concentration of the A dispersant in the negative electrode slurry. Further, the A dispersant forms a coating layer on the surface of the negative electrode active material.

In the negative electrode slurry of the present invention, a way by which the average distribution concentration of the A dispersant on the surface of the negative electrode active material is higher than the average distribution concentration of the A dispersant in the negative electrode slurry is not particularly limited and may be selected as actual demand, specifically, it can be achieved in the following ways: the first method: under a situation of adding an appropriate amount of the solvent, firstly the A dispersant, a small amount of the B dispersant and the negative electrode active material are mixed together, then an appropriate amount of the solvent, the water-soluble binder and a rest amount of the B dispersant are added and stirred to disperse uniformly; the second method: under a situation of not adding the solvent, firstly the A dispersant and the negative electrode active material are dry-mixed together, then the solvent, the water-soluble binder and the B dispersant are added and stirred to disperse uniformly; the third method: under a situation of adding an appropriate amount of solvent, firstly the A dispersant and the negative electrode active material are mixed, then an appropriate amount of the solvent, the water-soluble binder and the B dispersant are added and stirs to disperse uniformly. Preferably, the third method is adopted in the present invention. Firstly, the A dispersant coats the surface of the negative electrode active material, then the B dispersant is used to disperse the negative electrode active material coated with the A dispersant, this can effectively avoid the above-mentioned problems when using the A dispersant or the B dispersant alone, and make the electrochemical energy storage device have excellent dynamic performance and cycle performance.

In the negative electrode slurry of the present invention, if a content of the A dispersant is too low, the A dispersant cannot uniformly coat the surface of the negative electrode active material, so it has an limited effect on increasing stability of the SEI film, if the content of the A dispersant is too high, the A dispersant coating the surface of the negative electrode active material is too much, which is not beneficial to intercalation and deintercalation of the metal ions, so it can deteriorate dynamic performance of the electrochemical energy storage device. Preferably, the content of the A dispersant is 0.2%~1.5% of a total mass of the solid component, further preferably, the content of the A dispersant is 0.5%~1% of the total mass of the solid component.

In the negative electrode slurry of the present invention, if the content of the B dispersant is too high, some of the B dispersant will coat the surface of the negative electrode active material, the carboxylate will be formed by the B dispersant coating the surface of the negative electrode active material and the electrolyte and will be left on the SEI film, this results in that this part of the SEI film is unstable, if the content of the B dispersant is too low, dynamic performance of the electrochemical energy storage device is poor, which is not beneficial to rapid charging with large rate capability of the electrochemical energy storage device. Preferably, the content of the B dispersant is 0.5%~1.8% of the total mass of the solid component; further preferably, the content of the B dispersant is 0.5%~1 % of the total mass of the solid component.

In the negative electrode slurry of the present invention, a combined effect of the A dispersant and B dispersant can improve dynamic performance and cycle performance of the electrochemical energy storage device, it should be noted that, changes of the contents of the A dispersant and the B dispersant will directly influence electrochemical performance of the electrochemical energy storage device, if the contents are beyond the above range, relevant performance of the electrochemical energy storage device must be influenced, but for some non-restrict requirements, they can also improve dynamic performance and cycle performance of the electrochemical energy storage device to a certain extent.

In the negative electrode slurry of the present invention, a content of the water-soluble binder is 0.5%~3% of the total mass of the solid component, preferably, the content of the water-soluble binder is 1%~2% of the total mass of the solid component.

In the negative electrode slurry of the present invention, a sum of the content of the water-soluble binder and the content of the dispersant (the content of the dispersant means the sum of a mass of A dispersant and a mass of the B dispersant) is not greater than 5% of the total mass of the solid component of the negative electrode slurry. This is because, if the sum of the content of the water-soluble binder and the content of the dispersant is too high, the content of the negative electrode active material will be too low, which will decrease capacity of the electrochemical energy storage device. At the same time, when the sum of the content of the water-soluble binder and the content of the dispersant is a constant value, if the content of the water-soluble binder content is too high, then the content of the dispersant is too low, dispersion effect of the negative electrode slurry is poor; if the content of the water-soluble binder is too low, bond force of the negative electrode active material on the negative electrode current collector is insufficient, resulting in carbon-type active material falling off from the negative electrode plate, which will influence performance of the electrochemical energy storage device. Preferably, a mass ratio of the water-soluble binder and the dispersant is 1:1~2:1.

In the negative electrode slurry of the present invention, the solid component may further comprise a conductive agent. A type of the conductive agent is not particularly limited and may be selected as actual demand, specifically, the conductive agent is one or more selected from a group consisting of conductive carbon black, conductive carbon nanotube, conductive fiber and acetylene black. A content of the conductive agent is not particularly limited and may be selected as actual demand, preferably, a content of the conductive agent is not greater than 4% of the total mass of the solid component, further preferably, the content of the conductive agent is 0.5%~2% of the total mass of the solid component.

In the negative electrode slurry of the present invention, a ratio of a particle size D50 of the negative electrode slurry and a particle size D50 of the negative electrode active material is not higher than 1.2:1, if the ratio is higher than this value (that is 1.2:1), when the negative electrode slurry is coated on the surface the negative electrode current collector, particles will appear on the surface of the negative electrode plate and influence the quality of the negative electrode plate, thus influence performance of the electrochemical energy storage device.

In the negative electrode slurry of the present invention, if the coating layer formed by the A dispersant on the surface of the negative electrode active material is too thick, it will influence deintercalation rate of the metal ions in the coating layer, and in turn influence charging capability, if the coating layer is too thin, the negative electrode active material surface is easy to directly contact the B dispersant, so as to influence stability of the SEI film, preferably, a thickness of the coating layer is 1nm~100nm, further preferably, the thickness of the coating layer is 10nm~50nm.

In the negative electrode slurry of the present invention, the solvent is selected from deionized water.

Secondly, a negative electrode plate of the present invention is described.

The negative electrode plate of the present invention comprises a negative electrode current collector and a negative electrode active material layer provided on a surface of the negative electrode current collector. The negative electrode active material layer is formed by that the negative electrode slurry according to the first aspect of the present invention is coated on the negative electrode current collector and then dried. That is, the negative electrode active material layer comprises the solid component as mentioned above due to evaporation of the solvent of the negative electrode slurry by drying.

In the negative electrode plate of the present invention, a type of the negative electrode current collector is not particularly limited and may be selected as actual demand. Preferably, the negative electrode current collector is selected from copper foil or stainless steel foil.

In the negative electrode plate of the present invention, a drying process of the negative electrode slurry is not particularly limited and may be selected according to actual demand.

Thirdly, an electrochemical energy storage device of the present invention is described.

The electrochemical energy storage device of the present invention comprises the negative electrode plate of the present invention.

In the electrochemical energy storage device of the present invention, it should be noted that, the electrochemical energy storage device may be a lithium-ion battery, a sodium-ion battery or a supercapacitor. In the examples of the present invention, the described electrochemical energy storage device is a lithium-ion battery, but the present invention is not limited to this.

In the electrochemical energy storage device of the present invention, the electrochemical energy storage device further comprises a positive electrode plate, an electrolyte, a separator and a package case.

In the lithium-ion battery, a positive electrode active material of the positive electrode plate is selected from materials which can intercalate and deintercalate lithium ions, specifically, the positive electrode active material is selected from lithium transition metal composite oxide, preferably, the positive electrode active material is selected from a group consisting of lithium cobalt oxide, lithium nickel oxide, lithium manganese oxide, lithium nickel manganese oxide, lithium nickel cobalt manganese oxide, lithium nickel cobalt aluminum oxide and compounds obtained by adding other transition metals or non-transition metals to the above oxides.

In the lithium-ion battery, the electrolyte is a liquid electrolyte, the electrolyte comprises a lithium salt and a non-aqueous organic solvent, a type of the electrolyte is not particularly limited, and as long as normal transport of metal ions can be guaranteed..

In the lithium-ion battery, a type of the separator is not particularly limited and may be selected according to the actual demand, specifically, the separator is selected from a group consisting of a polyethylene film, a polypropylene film, a polyvinylidene fluoride film and a multilayer composite film thereof.

Hereinafter the present invention will be described in detail in combination with examples. It should be noted that, the examples described in the present invention are only used for explaining the present invention, and are not intended to limit the present invention. In the examples, the described electrochemical energy storage device is a lithium-ion secondary battery, but the present invention is not limited to this.

In the following example, the reagents, materials and instruments used are commercially available unless otherwise specified.

Example 1

(1) Preparation of a positive electrode plate: $LiCoO_2$ (positive electrode active material), acetylene black (conductive agent), polyvinylidene fluoride (binder) at a weight ratio of 97:1.4:1.6 were fully stirred and uniformly mixed with N-methyl-2-pyrrolidone (solvent) to obtain a positive electrode slurry, then the positive electrode slurry was uniformly coated on an aluminum foil (positive electrode current collector) with a thickness of 14μm, drying was then performed, which was followed by cold-pressing, after edge-trimming, slicing, slitting, a positive electrode plate was obtained.

(2) Preparation of a negative electrode plate: artificial graphite (negative electrode active material), conductive carbon black (conductive agent) and sodium carboxymethylcellulose (A dispersant) were kneaded in deionized water (solvent) to make a surface of the artificial graphite coated with a layer of sodium carboxymethylcellulose, then sodium polyacrylate (B dispersant) and styrene-butadiene latex (water-soluble binder) were added in, after fully stirred and uniformly mixed, a negative electrode slurry was obtained, where, a mass ratio of the artificial graphite, the conductive carbon black, the styrene-butadiene latex, the sodium carboxymethylcellulose and the sodium polyacrylate was 95:1:2:0.2:1.8, next the negative electrode slurry was uniformly coated on a copper foil (negative electrode current collector) with a thickness of 8μm, drying was then performed, which was followed by cold-pressing, after edge-trimming, slicing, slitting, a negative electrode plate was obtained.

(3) Preparation of a separator: a polyethylene film (PE) was used as a separator.

(4) Preparation of an electrolyte: ethylene carbonate (EC), ethylmethyl carbonate (EMC), diethyl carbonate (DEC) at a volume ratio of 1:1:1 were mixed to obtain a non-aqueous organic solvent, then $LiPF_6$ was added in, after uniformly mixed, preparation of the electrolyte was finished, where, a content of $LiPF_6$ was 12.5% of the total mass of the electrolyte.

(5) Preparation of a lithium-ion battery: the positive electrode plate, the separator and the negative electrode plate were laminated in order so as to make the separator positioned between the positive electrode plate and the negative electrode plate and separate the positive electrode plate and the negative electrode plate, then were wound to form an electrode assembly and placed in a package case, next the electrolyte was injected into and the package case was packaged, the lithium-ion battery was obtained.

Example 2

The preparation was the same as example 1, except that in the preparation of a negative electrode plate (step (2)), in the negative electrode slurry, the mass ratio of the artificial graphite, the conductive carbon black, the styrene-butadiene latex, the sodium carboxymethylcellulose and the sodium polyacrylate was 95:1:2:1.5:0.5.

Example 3

The preparation was the same as example 1, except that in the preparation of a negative electrode plate (step (2)), in the negative electrode slurry, the mass ratio of the artificial graphite, the conductive carbon black, the styrene-butadiene latex, the sodium carboxymethylcellulose and the sodium polyacrylate was 95:1:2:0.5:1.5.

Example 4

The preparation was the same as example 1, except that in the preparation of a negative electrode plate (step (2)), in the negative electrode slurry, the mass ratio of the artificial graphite, the conductive carbon black, the styrene-butadiene latex, the sodium carboxymethylcellulose and the sodium polyacrylate was 95:1:2:1:1.

Comparative example 1

The preparation was the same as example 1, except that in the preparation of a negative electrode plate (step (2)), artificial graphite (negative electrode active material), carbon black (conductive agent conductive) and sodium carboxymethylcellulose (A dispersant) were kneaded in deionized water (solvent) to make a surface of the artificial graphite coated with a layer of sodium carboxymethylcellulose, then styrene-butadiene latex (water-soluble binder) was added in, after fully stirred and uniformly mixed, a negative electrode slurry was obtained, where, the mass ratio of the artificial graphite, the conductive carbon black, the styrene-butadiene latex and the sodium carboxymethylcellulose was 95:1:2:2, next the negative electrode slurry was uniformly coated on a copper foil (negative electrode current collector) with a thickness of 8μm, drying was then performed, which was followed by cold-pressing, after edge-trimming, slicing, slitting, a negative electrode plate was obtained.

Comparative example 2

The preparation was the same as example 1, except that in the preparation of a negative electrode plate (step (2)), artificial graphite (negative electrode active material), carbon black (conductive agent conductive) and sodium polyacrylate (A dispersant) were kneaded in deionized water (solvent) to make a surface of the artificial graphite coated with a layer of sodium polyacrylate, then styrene-butadiene latex (water-soluble binder) was added in, after fully stirred and uniformly mixed, a negative electrode slurry was obtained, where, the mass ratio of the artificial graphite, the conductive carbon black, the styrene-butadiene latex and the sodium polyacrylate is 95:1:2:2, next the negative electrode slurry was uniformly coated on a copper foil (negative electrode current collector) with a thickness of $8\mu m$, drying was then performed, which was followed by cold-pressing, after edge-trimming, slicing, slitting, a negative electrode plate was obtained.

Comparative example 3

The preparation was the same as example 1, except that in the preparation of a negative electrode plate (step (2)), artificial graphite (negative electrode active material), carbon black (conductive agent conductive) and sodium polyacrylate (A dispersant) were kneaded in deionized water (solvent) to make a surface of the artificial graphite coated with a layer of sodium polyacrylate, then styrene-butadiene latex (water-soluble binder) and sodium carboxymethylcellulose (B dispersant) were added in, after fully stirred and uniformly mixed, a negative electrode slurry was obtained, wherein, the mass ratio of the artificial graphite, the conductive carbon black, the styrene-butadiene latex, the sodium carboxymethylcellulose and the sodium polyacrylate is 95:1:2:0.2:1.8, next the negative electrode slurry was uniformly coated on a copper foil (negative electrode current collector) with a thickness of $8\mu m$, drying was then performed, which was followed by cold-pressing, after edge-trimming, slicing, slitting, a negative electrode plate was obtained.

Comparative example 4

The preparation was the same as example 1, except that in the preparation of a negative electrode plate (step (2)): artificial graphite (negative electrode active material), conductive carbon black (conductive agent) and sodium polyacrylate (A dispersant) were kneaded in deionized water (solvent) to make a surface of the artificial graphite coated with a layer of sodium polyacrylate, then styrene-butadiene latex (water-soluble binder) and sodium carboxymethylcellulose (B dispersant) were added in, after fully stirred and uniformly mixed, a negative electrode slurry was obtained, where, the mass ratio of the artificial graphite, the conductive carbon black, the styrene-butadiene latex, the sodium carboxymethylcellulose and the sodium polyacrylate was 95:1:2:1.5:0.5, next the negative electrode slurry was uniformly coated on a copper foil (negative electrode current collector) with a thickness of $8\mu m$, drying was then performed, which was followed by cold-pressing, after edge-trimming, slicing, slitting, a negative electrode plate was obtained.

Comparative example 5

The preparation was the same as example 1, except that in the preparation of a negative electrode plate (step (2)): artificial graphite (negative electrode active material), conductive carbon black (conductive agent) and sodium polyacrylate (A dispersant) were kneaded in deionized water (solvent) to make a surface of the artificial graphite coated with a layer of sodium polyacrylate, then styrene-butadiene latex (water-soluble binder) and sodium carboxymethylcellulose (B dispersant) were added in, after fully stirred and uniformly mixed, a negative electrode slurry was obtained, where, the mass ratio of the artificial graphite, the conductive carbon black, the styrene-butadiene latex, the sodium carboxymethylcellulose and the sodium polyacrylate was 95:1:2:1:1, next the negative electrode slurry was uniformly coated on a copper foil (negative electrode current collector) with a thickness of $8\mu m$, drying was then performed, which was followed by cold-pressing, after edge-trimming, slicing, slitting, a negative electrode plate was obtained.

Comparative example 6

The preparation was the same as example 1, except that in the preparation of a negative electrode plate (step (2)): in the negative electrode slurry, the mass ratio of the artificial graphite, the conductive carbon black, the styrene-butadiene latex, the sodium carboxymethylcellulose and the sodium polyacrylate was 95.9:1:2:0.1:1.

Comparative example 7

The preparation was the same as example 1, except that in the preparation of a negative electrode plate (step (2)): in the negative electrode slurry, the mass ratio of the artificial graphite, the conductive carbon black, the styrene-butadiene latex, the sodium carboxymethylcellulose and the sodium polyacrylate was 94:1:2:2:1.

Comparative example 8

The preparation was the same as example 1, except that in the preparation of a negative electrode plate (step (2)): in the negative electrode slurry, the mass ratio of the artificial graphite, the conductive carbon black, the styrene-butadiene latex, the sodium carboxymethylcellulose and the sodium polyacrylate was 95.8:1:2:1:0.2.

Comparative example 9

The preparation was the same as example 1, except that in the preparation of a negative electrode plate (step (2)): in the negative electrode slurry, the mass ratio of the artificial graphite, the conductive carbon black, the styrene-butadiene latex, the sodium carboxymethylcellulose and the sodium polyacrylate was 94:1:2:1:2.
Finally, test processes and test results of the lithium-ion batteries were described.

(1) Test of rapid charging performance of the lithium-ion battery

Five lithium-ion batteries were tested in each group. At 25°C, the lithium-ion battery was discharged to voltage of 3V at a constant current of 0.5C, then rapid charging test was started. Process of the rapid charging test was: the lithium-ion battery was charged to voltage of 4.4V at a constant current of 2C (that was a current value of fully charged to theoretical capacity in 0.5h), then the lithium-ion battery was charged to a current of 0.05C at a constant voltage of 4.4V, total capacity of constant current charging process of the lithium-ion battery was marked as CC, a total capacity of constant voltage charging process of the lithium-ion battery was marked as CV.

$$\text{Capacity retention rate } \eta \text{ of constant current charging process of the lithium-ion battery}$$
$$= CC/(CC+CV) \times 100\%.$$

(2) Cycle performance test of the lithium-ion battery

Five lithium-ion batteries were tested in each group. At 25°C, the lithium-ion battery was discharged to voltage of 3V at a constant current of 0.5C, then cycle test was started. Process of the cycle test was: the lithium-ion battery was charged to voltage of 4.4V at a constant current of 2C (that was current value of fully charged to theoretical capacity in 0.5h), then the lithium-ion battery was charged to current of 0.05C at a constant voltage of 4.4V, next the lithium-ion battery was discharged to voltage of 3V at a constant current of 1C, this was the first cycle process of the lithium-ion battery, charged capacity and discharged capacity of the first cycle process of the lithium-ion battery were marked. Then the above charged-discharged cycle process of the lithium-ion battery was performed again, charged capacity of 200th cycle and discharged capacity of 200th cycle were marked. Capacity retention rate of the first cycle process of the lithium-ion battery was set as correction coefficient K. Where, K = (discharged capacity of first cycle / charged capacity of first cycle) $\times$ 100%.

$$\text{Capacity retention rate } \varepsilon \text{ after 200}^{th} \text{ cycle under 25°C of the lithium-ion battery} =$$
$$(\text{discharged capacity of 200}^{th} \text{ cycle of the lithium-ion battery / charged capacity of 200}^{th} \text{ cycle of}$$
$$\text{the lithium-ion battery}) \times K \times 100\%.$$

Table 1 Parameters of examples 1-4 and comparative examples 1-9

| | Dispersant coated on the type active on surface material of the carbon-type active material | | | Dispersant dispersed place at other | |
| | Type | Content | Thickness of coating layer/nm | Type | Content |
|---|---|---|---|---|---|
| Example 1 | sodium carboxymethyl cellulose | 0.2% | 1 | sodium polyacrylate | 1.8% |
| Example 2 | sodium carboxymethyl cellulose | 1.5% | 100 | sodium polyacrylate | 0.5% |
| Example 3 | sodium carboxymethyl cellulose | 0.5% | 10 | sodium polyacrylate | 1.5% |

(continued)

| | Dispersant coated on the type active on surface material of the carbon-type active material | | | Dispersant dispersed place at other | |
|---|---|---|---|---|---|
| | Type | Content | Thickness of coating layer/nm | Type | Content |
| Example 4 | sodium carboxymethyl cellulose | 1.0% | 50 | sodium polyacrylate | 1.0% |
| Comparative example 1 | sodium carboxymethylcellulose | 2.0% | 200 | / | / |
| Comparative example 2 | sodium polyacrylate | 2.0% | 150 | / | / |
| Comparative example 3 | sodium polyacrylate | 1.8% | 100 | sodium carboxymethylcellulose | 0.2% |
| Comparative example 4 | sodium polyacrylate | 0.5% | 5 | sodium carboxymethylcellulose | 1.5% |
| Comparative example 5 | sodium polyacrylate | 1.0% | 40 | sodium carboxymethylcellulose | 1.0% |
| Comparative example 6 | sodium carboxymethylcellulose | 0.1% | 0.4 | sodium polyacrylate | 1.0% |
| Comparative example 7 | sodium carboxymethylcellulose | 2.0% | 180 | sodium polyacrylate | 1.0% |
| Comparative example 8 | sodium carboxymethylcellulose | 1.0% | 5 | sodium polyacrylate | 0.2% |
| Comparative example 9 | sodium carboxymethylcellulose | 1.0% | 110 | sodium polyacrylate | 2.0% |

| Table 2 Test result of examples 1-4 and comparative examples 1-9 | | |
|---|---|---|
| | $\eta$ | $\varepsilon$ |
| Example 1 | 65% | 75% |
| Example 2 | 59% | 84% |
| Example 3 | 68% | 92% |
| Example 4 | 62% | 93% |
| Comparative example 1 | 55% | 86% |
| Comparative example 2 | 68% | 65% |
| Comparative example 3 | 66% | 68% |
| Comparative example 4 | 60% | 72% |
| Comparative example 5 | 63% | 78% |
| Comparative example 6 | 67% | 70% |
| Comparative example 7 | 60% | 78% |
| Comparative example 8 | 58% | 82% |
| Comparative example 9 | 62% | 67% |

It could be analyzed from the results in table 2, in examples 1-4 and comparative examples 1-5, for sake of convenience, the sum of the content of the sodium carboxymethylcellulose and the content of the sodium polyacrylate was controlled to be 2% of the total mass of the solid component of the negative electrode slurry. In comparative example 1, the sodium carboxymethylcellulose coated the surface of the negative electrode active material alone, capacity retention rate $\varepsilon$ after 200th cycle under 25°C of the lithium-ion battery was high, but capacity retention rate $\eta$ of constant current charging process of the lithium-ion battery was low. This was because when the sodium carboxymethylcellulose was used alone, the content of the sodium carboxymethylcellulose on the surface of the negative electrode active material was too much and the coating layer was too thick, which was not beneficial to lithium ion transport, during charging process, some lithium ions could not intercalate into the negative electrode active material, and would be precipitated on the surface of the negative electrode active material, which would become irreversible dead lithium and deteriorate capacity retention rate $\varepsilon$ after 200th cycle under 25°C of the lithium-ion battery to a certain extent, that was cycle performance of the lithium-ion was deteriorated, at the same time too much sodium carboxymethylcellulose coated the surface of the negative electrode active material would also increase internal polarization of the lithium-ion battery, thus capacity retention rate $\eta$ of constant current charging process of the lithium-ion battery was decreased, which was not beneficial to rapid charging of the lithium-ion battery and not beneficial to dynamic performance of the lithium-ion battery. In comparative example 2, when the sodium polyacrylate coated the surface of the negative electrode active material alone, lithium ion conduction was facilitated, advantage of constant current charging of the lithium-ion battery was increased and charging time was effectively shortened, but capacity retention rate $\varepsilon$ after 200th cycle under 25°C was decreased too rapidly, which resulted in a reduction of service life of the lithium-ion battery.

It could be analyzed in comparative examples 3-5, the sodium carboxymethylcellulose and the sodium polyacrylate were used in a combination way, but the sodium polyacrylate was preferential used to knead the negative electrode active material, then the sodium carboxymethylcellulose was used to disperse the negative electrode active material coated with the sodium polyacrylate, average distribution concentration of the sodium carboxymethylcellulose on the surface of the negative electrode active material was lower than average distribution concentration of the sodium carboxymethylcellulose in the negative electrode slurry, and finally this made capacity retention rate $\eta$ of constant current charging process of the lithium-ion battery of the lithium-ion battery fluctuate little, but capacity retention rate $\varepsilon$ after 200th cycle under 25°C was decreased more obviously. This was because endophilicity of the sodium polyacrylate and the negative electrode active material were both poor, the sodium carboxymethylcellulose coated the surface of the sodium polyacrylate would weaken direct contact between the sodium polyacrylate and the electrolyte, thus would influence lithium ion transport to a certain extent, and would result in little fluctuation or decrease of capacity retention rate $\eta$ of constant current charging process of the lithium-ion battery of the lithium-ion battery. In addition, compared with the sodium carboxymethylcellulose, endophilicity of the sodium polyacrylate and the negative electrode active material were poor, that sodium polyacrylate was used to knead the negative electrode active material could not effectively improve surface roughness of the artificial graphite, at the same time lithium carboxylate formed by the sodium polyacrylate and the electrolyte would be left on the SEI film on the surface of the negative electrode active material, and made the SEI film unstable, when the SEI film was destroyed in charged-discharged cycle process of the lithium-ion battery, a new SEI film was repeatedly formed, this would continuously consume the lithium ions and the solvent of the electrolyte and decrease velocity of the lithium ion conduction, therefore capacity retention rate $\varepsilon$ after 200th cycle under 25°C was decreased more obviously and service life of the lithium-ion battery was shortened.

In examples 1-4, the sodium carboxymethylcellulose was preferential used to knead the negative electrode active material, then the sodium polyacrylate was used to disperse the negative electrode active material coated with the sodium carboxymethylcellulose, average distribution concentration of the sodium carboxymethylcellulose on the surface of the negative electrode active material was higher than average distribution concentration of the sodium carboxymethylcellulose in the negative electrode slurry, capacity retention rate $\eta$ of constant current charging process of the lithium-ion battery and capacity retention rate $\varepsilon$ after 200th cycle under 25°C of the lithium-ion battery were both high. This was because sodium carboxymethylcellulose was preferential used to knead the negative electrode active material, the sodium carboxymethylcellulose could preferential coat the surface of the negative electrode active material and effectively improve surface roughness of the negative electrode active material, which made the SEI film more stable, thus ensured that the lithium ion conduction worked properly, at the same time endophilicity of the sodium polyacrylate of the negative electrode slurry for the electrolyte was more better, which could further improve lithium ion conduction and make lithium ion more smoothly intercalate and deintercalate of the negative electrode active material of charged-discharged cycle process of the lithium-ion battery, and effectively improve charging efficiency and capacity retention rate $\varepsilon$ after 200th cycle under 25°C of the lithium-ion battery, that was the dynamic performance and cycle performance of the lithium-ion battery could be improved.

In the comparative example 6, when the content of the sodium carboxymethylcellulose was less than 0.2%, the sodium carboxymethylcellulose could not effectively coat the surface of the negative electrode active material, some exposed negative electrode active material contacted the sodium polyacrylate, in this location the SEI film formed on the surface of the negative electrode active material was unstable, when a new SEI film was continually generated, the electrolyte quickly consumed, which thus resulted in quickly decrease of capacity retention rate $\varepsilon$ after 200th cycle under 25°C of the lithium-ion battery. However in comparative example 7, when the content of the sodium carboxymethylcellulose was greater than 1.5%, the sodium carboxymethylcellulose on the surface of the negative electrode active material was too much, the coating layer formed by the sodium carboxymethylcellulos on the surface of the negative electrode active material was too thick, which was not beneficial to lithium ion transport, during charging process, some lithium ions could not intercalate into the negative electrode active material, which would be precipitated on the surface of the negative electrode active material and became irreversible dead lithium, capacity retention rate $\varepsilon$ after 200th cycle under 25°C of the lithium-ion battery was deteriorated to a certain extent, that is, service life of the lithium-ion battery was deteriorated, polarization of negative electrode of the lithium-ion battery was increased and capacity retention rate $\eta$ of

constant current charging process of the lithium-ion battery of the lithium-ion battery was decreased, which was not beneficial to rapid charging of the lithium-ion battery.

In the comparative example 8,when the content of the sodium polyacrylate was less 0.5%, compared with the lithium-ion battery without adding the sodium polyacrylate, capacity retention rate $\eta$ of constant current charging process of the lithium-ion battery could be slightly improved. However improvement of endophilicity for the electrolyte was limited due to less content of the sodium polyacrylate, polarization of negative electrode of the lithium-ion battery was still large, therefore capacity retention rate $\eta$ of constant current charging process of the lithium-ion battery was still low. However in comparative example 9, the content sodium carboxymethylcellulose which was used to knead was moderated, when the content of the sodium polyacrylate was greater than 1.8%, sodium polyacrylate as the dispersant at this time was too much, this made rebound of the negative electrode plate of the negative electrode slurry preparation during lithium-ion battery charged-discharged cycle process increase, which would deteriorate internal contact interface of the lithium-ion battery, thus increased polarization of the negative electrode. Therefore, capacity retention rate $\eta$ of constant current charging process of the lithium-ion battery and capacity retention rate after 200th charging-discharging cycle of the lithium-ion battery were both low. In addition, the increase of content of dispersant would result in decrease of content of the negative electrode active material, this would indirectly decrease energy density of the lithium-ion battery. Unstable organic lithium carboxylate would be formed due to excess of the sodium polyacrylate and the lithium salt, would be left on the surface of the negative electrode and destroy the SEI film to a certain extent, thus new SEI film would be repeatedly regenerated during continually consume lithium ion of the electrolyte and decreased lithium ion conduction, thus resulted in decrease of capacity retention rate $\varepsilon$ after 200th cycle under 25°C of the lithium-ion battery.

Therefore when the content of the sodium carboxymethylcellulose was 0.2%~1.5% and the content of the sodium polyacrylate was 0.5%~1.8%, the thickness of the coating layer of the sodium carboxymethylcellulose on the surface of the negative electrode active material was moderate, electrochemical performance of the lithium-ion battery was excellent, and when the content of the sodium carboxymethylcellulose was 0.5%~1% and the content of the sodium polyacrylate 0.5%~1%, thickness of the coating layer of the sodium carboxymethylcellulose on the surface of the negative electrode active material was 10nm~50nm, electrochemical performance of the lithium-ion battery was more excellent.

**Claims**

1. A negative electrode slurry, comprising a solvent and a solid component dispersed in the solvent, the solid component comprising:

   a negative electrode active material;
   a water-soluble binder; and
   a dispersant;
   wherein
   the negative electrode active material comprises a carbon-type active material;
   the dispersant comprises an A dispersant and a B dispersant, the A dispersant is a cellulose-type dispersant, the B dispersant is at least one of poly(acrylic acid)-type dispersant and polyacrylate-type dispersant;
   a surface of the negative electrode active material is coated with a layer of the A dispersant;
   an average distribution concentration of the A dispersant on the surface of the negative electrode active material is higher than an average distribution concentration of the A dispersant in the negative electrode slurry;
   the A dispersant is at least one selected from a group consisting of sodium carboxymethylcellulose, carboxymethylcellulose, methylcellulose, ethylcellulose, methylol cellulose and hydroxypropyl cellulose;
   the B dispersant is at least one selected from a group consisting of poly(acrylic acid), poly(methacrylic acid), sodium polyacrylate, sodium polymethacrylate, potassium polyacrylate, polypotassium methacrylate, lithium polyacrylate and lithium polymethacrylate;
   the water-soluble binder is at least one selected from a group consisting of styrene-butadiene latex, styrene-acrylic latex, polyacrylate, polyacrylate copolymer, polymethacrylate, poly(vinyl alcohol), polyurethane, polyacrylamide and acrylic acid and acrylonitrile copolymer.

2. The negative electrode slurry according to Claim 1, wherein a content of the carbon-type active material is not less than 90% of a total mass of the negative electrode active material.

3. The negative electrode slurry according to Claim 1, wherein

   the A dispersant is selected from sodium carboxymethylcellulose;
   the B dispersant is at least one selected from a group consisting of sodium polyacrylate, sodium polymethacrylate, lithium polyacrylate and lithium polymethacrylate.

4. The negative electrode slurry according to Claim 1, wherein

a content of the A dispersant is 0.2%~1.5% of a total mass of the solid component;
a content of the B dispersant is 0.5%~1.8% of the total mass of the solid component.

5. The negative electrode slurry according to Claim 4, wherein
the content of the A dispersant is 0.5%~1% of the total mass of the solid component; the content of the B dispersant is 0.5%~1% of the total mass of the solid component.

6. The negative electrode slurry according to Claim 1, wherein a mass ratio of the water-soluble binder and the dispersant is 1:1~2:1.

7. The negative electrode slurry according to Claim 1, wherein a thickness of the coating layer is 1nm~100nm.

8. The negative electrode slurry according to Claim7, wherein the thickness of the coating layer is 10nm~50nm.

9. A negative electrode plate, comprising a negative electrode current collector and a negative electrode active material layer provided on a surface of the negative electrode current collector;
wherein

the negative electrode active material layer comprises a solid component;
the solid component comprises a negative electrode active material, a water-soluble binder and a dispersant;
the negative electrode active material comprises a carbon-type active material;
the dispersant comprises an A dispersant and a B dispersant, the A dispersant is a cellulose-type dispersant, the B dispersant is at least one of poly(acrylic acid)-type dispersant and polyacrylate-type dispersant;
a surface of the negative electrode active material is coated with a layer of the A dispersant;
the A dispersant is at least one selected from a group consisting of sodium carboxymethylcellulose, carboxymethylcellulose, methylcellulose, ethylcellulose, methylol cellulose and hydroxypropyl cellulose;
the B dispersant is at least one selected from a group consisting of poly(acrylic acid), poly(methacrylic acid), sodium polyacrylate, sodium polymethacrylate, potassium polyacrylate, polypotassium methacrylate, lithium polyacrylate and lithium polymethacrylate;
the water-soluble binder is at least one selected from a group consisting of styrene-butadiene latex, styrene-acrylic latex, polyacrylate, polyacrylate copolymer, polymethacrylate, poly(vinyl alcohol), polyurethane, polyacrylamide and acrylic acid and acrylonitrile copolymer.

10. The negative electrode plate according to Claim 9, wherein

a content of the A dispersant is 0.2%~1.5% of a total mass of the solid component;
a content of the B dispersant is 0.5%~1.8% of the total mass of the solid component.

11. An electrochemical energy storage device, comprising the negative electrode plate according to any one of Claims 9 to 10.

**Patentansprüche**

1. Negativelektroden-Aufschlämmung, umfassend ein Lösemittel und einen in dem Lösemittel dispergierten festen Bestandteil, wobei der feste Bestandteil umfasst:

ein Negativelektroden-Aktivmaterial;
ein wasserlösliches Bindemittel; und
ein Dispergiermittel;
wobei
das Negativelektroden-Aktivmaterial ein Aktivmaterial des Kohlenstoff-Typs umfasst;
das Dispergiermittel ein A-Dispergiermittel und ein B-Dispergiermittel umfasst, das A-Dispergiermittel ein Dispergiermittel des Cellulose-Typs ist, das B-Dispergiermittel mindestens eines von einem Dispergiermittel des Poly(acrylsäure)-Typs und einem Dispergiermittel des Polyacrylat-Typs ist;

eine Oberfläche des Negativelektroden-Aktivmaterials mit einer Schicht des A-Dispergiermittels überzogen ist;

eine mittlere Verteilungskonzentration des A-Dispergiermittels auf der Oberfläche des Negativelektroden-Aktivmaterials höher ist als eine mittlere Verteilungskonzentration des A-Dispergiermittels in der Negativelektroden-Aufschlämmung;

das A-Dispergiermittel mindestens eines ist, welches ausgewählt ist aus einer Gruppe bestehend aus Natrium-Carboxymethylcellulose, Carboxymethylcellulose, Methylcellulose, Ethylcellulose, Methylolcellulose und Hydroxypropylcellulose;

das B-Dispergiermittel mindestens eines ist, welches ausgewählt ist aus einer Gruppe bestehend aus Poly(acrylsäure), Poly(methacrylsäure), Natriumpolyacrylat, Natriumpolymethacrylat, Kaliumpolyacrylat, Kaliumpolymethacrylat, Lithiumpolyacrylat und Lithiumpolymethacrylat;

das wasserlösliche Bindemittel mindestens eines ist, welches ausgewählt ist aus einer Gruppe bestehend aus Styrol-Butadien-Latex, Styrol-Acryl-Latex, Polyacrylat, Polyacrylat-Copolymer, Polymethacrylat, Poly(vinylalkohol), Polyurethan, Polyacrylamid und Acrylsäure- und Acrylnitril-Copolymer.

2. Negativelektroden-Aufschlämmung nach Anspruch 1, wobei ein Gehalt des Aktivmaterials des Kohlenstoff-Typs nicht weniger als 90% einer Gesamtmasse des Negativelektroden-Aktivmaterials beträgt.

3. Negativelektroden-Aufschlämmung nach Anspruch 1, wobei

das A-Dispergiermittel aus Natrium-Carboxymethylcellulose ausgewählt ist;

das B-Dispergiermittel mindestens eines ist, welches ausgewählt ist aus einer Gruppe bestehend aus Natriumpolyacrylat, Natriumpolymethacrylat, Lithiumpolyacrylat und Lithiumpolymethacrylat.

4. Negativelektroden-Aufschlämmung nach Anspruch 1, wobei

ein Gehalt des A-Dispergiermittels 0,2%~1,5% einer Gesamtmasse des festen Bestandteils beträgt;

ein Gehalt des B-Dispergiermittels 0,5%~1,8% der Gesamtmasse des festen Bestandteils beträgt.

5. Negativelektroden-Aufschlämmung nach Anspruch 4, wobei

der Gehalt des A-Dispergiermittels 0,5%~1% der Gesamtmasse des festen Bestandteils beträgt;

der Gehalt des B-Dispergiermittels 0,5%~1% der Gesamtmasse des festen Bestandteils beträgt.

6. Negativelektroden-Aufschlämmung nach Anspruch 1, wobei ein Massenverhältnis des wasserlöslichen Bindemittels und des Dispergiermittels 1:1~2:1 beträgt.

7. Negativelektroden-Aufschlämmung nach Anspruch 1, wobei eine Dicke der Überzugsschicht 1 nm~100 nm beträgt.

8. Negativelektroden-Aufschlämmung nach Anspruch 7, wobei die Dicke der Überzugsschicht 10 nm~50 nm beträgt.

9. Negativelektrodenplatte, umfassend einen Negativelektroden-Stromabnehmer und eine auf einer Oberfläche des Negativelektroden-Stromabnehmers vorgesehene Negativelektroden-Aktivmaterial-Schicht;
wobei

die Negativelektroden-Aktivmaterial-Schicht einen festen Bestandteil umfasst;

der feste Bestandteil ein Negativelektroden-Aktivmaterial, ein wasserlösliches Bindemittel und ein Dispergiermittel umfasst;

das Negativelektroden-Aktivmaterial ein Aktivmaterial des Kohlenstoff-Typs umfasst;

das Dispergiermittel ein A-Dispergiermittel und ein B-Dispergiermittel umfasst, das A-Dispergiermittel ein Dispergiermittel des Cellulose-Typs ist, und das B-Dispergiermittel mindestens eines von einem Dispergiermittel des Poly(acrylsäure)-Typs und des Polyacrylat-Typs ist;

eine Oberfläche des Negativelektroden-Aktivmaterials mit einer Schicht des A-Dispergiermittels überzogen ist;

das A-Dispergiermittel mindestens eines ist, welches ausgewählt ist aus einer Gruppe bestehend aus Natrium-Carboxymethylcellulose, Carboxymethylcellulose, Methylcellulose, Ethylcellulose, Methylolcellulose und Hydroxypropylcellulose;

das B-Dispergiermittel mindestens eines ist, welches ausgewählt ist aus einer Gruppe bestehend aus Poly(acrylsäure), Poly(methacrylsäure), Natriumpolyacrylat, Natriumpolymethacrylat, Kaliumpolyacrylat, Kaliumpolymethacrylat, Lithiumpolyacrylat und Lithiumpolymethacrylat;
das wasserlösliche Bindemittel mindestens eines ist, welches ausgewählt ist aus einer Gruppe bestehend aus Styrol-Butadien-Latex, Styrol-Acryl-Latex, Polyacrylat, Polyacrylat-Copolymer, Polymethacrylat, Poly(vinylalkohol), Polyurethan, Polyacrylamid und Acrylsäure- und Acrylnitril-Copolymer.

**10.** Negativelektroden-Platte nach Anspruch 9, wobei

ein Gehalt des A-Dispergiermittels 0,2%~1,5% einer Gesamtmasse des festen Bestandteils beträgt;
ein Gehalt des B-Dispergiermittels 0,5%~1,8% der Gesamtmasse des festen Bestandteils beträgt.

**11.** Elektrochemische Energiespeichervorrichtung, umfassend die Negativelektroden-Platte nach einem der Ansprüche 9 bis 10.

**Revendications**

**1.** Solution épaisse d'électrode négative, comprenant un solvant et un composant solide dispersé dans le solvant, le composant solide comprenant :

un matériau actif d'électrode négative ;
un liant hydrosoluble ; et
un dispersant ;
le matériau actif d'électrode négative comprenant un matériau actif de type carbone ;
le dispersant comprenant un dispersant A et un dispersant B, le dispersant A étant un dispersant de type cellulose, le dispersant B étant au moins un d'un dispersant de type poly(acide acrylique) et un dispersant de type polyacrylate ;
une surface du matériau actif d'électrode négative étant revêtue avec une couche du dispersant A ;
une concentration de distribution moyenne du dispersant A sur la surface du matériau actif d'électrode négative étant supérieure à une concentration de distribution moyenne du dispersant A dans la solution épaisse d'électrode négative ;
le dispersant A étant au moins un choisi dans un groupe constitué par la carboxyméthylcellulose de sodium, la carboxymétylcellulose, la méthylcellulose, l'éthylcellulose, la méthylol cellulose et l'hydroxypropyl cellulose ;
le dispersant B étant au moins un choisi dans un groupe constitué par le poly(acide acrylique), le poly(acide méthacrylique), le polyacrylate de sodium, le polyméthacrylate de sodium, le polyacrylate de potassium, le polyméthacrylate de potassium, le polyacrylate de lithium et le polyméthacrylate de lithium ;
le liant hydrosoluble étant au moins un choisi dans un groupe constitué par le latex de styrène-butadiène, le latex de styrène-acrylique, le polyacrylate, un copolymère de polyacrylate, le polyméthacrylate, le poly(alcool vinylique), le polyuréthane, le polyacrylamide et un copolymère d'acide acrylique et d'acrylonitrile.

**2.** Solution épaisse d'électrode négative selon la revendication 1, dans laquelle une teneur du matériau actif de type carbone est de pas moins de 90 % d'une masse totale du matériau actif d'électrode négative.

**3.** Solution épaisse d'électrode négative selon la revendication 1, dans laquelle
le dispersant A est choisi parmi la caboxyméthylcellulose de sodium ; le dispersant B est au moins un choisi dans un groupe constitué par le polyacrylate de sodium, le polyméthacrylate de sodium, le polyacrylate de lithium et le polyméthacrylate de lithium.

**4.** Solution épaisse d'électrode négative selon la revendication 1, dans laquelle

une teneur du dispersant A est de 0,2 % ~ 1,5 % d'une masse totale du composant solide ;
une teneur du dispersant B est de 0,5 % ~ 1,8 % de la masse totale du composant solide.

**5.** Solution épaisse d'électrode négative selon la revendication 4, dans laquelle

la teneur du dispersant A est de 0,5 % ~ 1 % de la masse totale du composant solide ;
la teneur du dispersant B est de 0,5 % ~ 1 % de la masse totale du composant solide.

**6.** Solution épaisse d'électrode négative selon la revendication 1, dans laquelle un rapport en masse du liant hydrosoluble et du dispersant est de 1 : 1 % ~ 2 : 1.

7. Solution épaisse d'électrode négative selon la revendication 1, dans laquelle une épaisseur de la couche de revêtement est de 1 nm ~ 100nm.

8. Solution épaisse d'électrode négative selon la revendication 7, dans laquelle l'épaisseur de la couche de revêtement est de 10 nm ~ 50 nm.

9. Plaque d'électrode négative, comprenant un collecteur de courant d'électrode négative et une couche de matériau actif d'électrode négative fournie sur une surface du collecteur de courant d'électrode négative ;
dans laquelle

la couche de matériau d'électrode négative comprendt un composant solide ;
le composant solide comprend un matériau actif d'électrode négative, un liant hydrosoluble et un dispersant ;
le matériau actif d'électrode négative comprend un matériau actif de type carbone ;
le dispersant comprend un dispersant A et un dispersant B, le dispersant A est un dispersant de type cellulose, le dispersant B est au moins un dispersant de type poly(acide acrylique) et un dispersant de type polyacrylate ;
une surface du matériau actif d'électrode négative est revêtue avec une couche du dispersant A ;
le dispersant A est au moins un choisi dans un groupe constitué par la carboxyméthylcellulose de sodium, la carboxyméthylcellulose, la méthylcellulose, l'éthylcellulose la méthylol cellulose et l'hydroxypropyl cellulose ;
le dispersant B est au moins un choisi dans un groupe constitué par le poly(acide acrylique), le poly(acide méthacrylique), le polyacrylate de sodium, le polyméthacrylate de sodium, le polyacrylate de potassium, le polyméthacrylate de potassium, le polyacrylate lithium et le polyméthacrylate de lithium ;
le liant hydrosoluble est au moins un choisi dans le groupe constitué par le latex de styrène-butadiène, le latex de styrène-acrylique, le polyacrylate, un copolymère de polyacrylate, le polyméthacrylate, le poly(alcool vinylique), le polyuréthane, le polyacrylamide et un copolymère d'acide méthacrylique et d'acrylonitrile.

10. Plaque d'électrode négative selon la revendication 9, dans laquelle

une teneur du dispersant A est de 0,2 % ~ 1,5 % d'une masse totale du composant solide ;
une teneur du dispersant B est de 0,5 % ~ 1,8 % de la masse totale du composant solide.

11. Dispositif de stockage d'énergie électrochimique, comprenant la plaque d'électrode négative selon l'une quelconque es revendications 9 et 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710771572
- US 2006257738 A1
- US 2004258991 A1